Europäisches Patentamt

European Patent Office

Office européen des brevets

(11) Publication number: **0 083 248**

**B1**

(12) **EUROPEAN PATENT SPECIFICATION**

(45) Date of publication of patent specification: **23.11.88**

(21) Application number: **82307001.6**

(22) Date of filing: **30.12.82**

(51) Int. Cl.⁴: **G 06 F 15/336**

(54) Apparatus for calculating auto-correlation coefficients.

(30) Priority: **29.12.81 JP 210296/81**

(43) Date of publication of application:
**06.07.83 Bulletin 83/27**

(45) Publication of the grant of the patent:
**23.11.88 Bulletin 88/47**

(84) Designated Contracting States:
**DE FR GB IT**

(56) References cited:

**INTERNATIONAL CONFERENCE ON CHARGE
COUPLED DEVICES, Conference 3, 1976, THE
TECHNOLOGY AND APPLICATIONS OF
CHARGE COUPLED DEVICES, University of
Edinburgh, EDINBURGH (GB), pages 238-258. I.
LAGNADO et al.: "A CCD analog and digital
correlator"**

(73) Proprietor: **SHARP KABUSHIKI KAISHA
22-22 Nagaike-cho Abeno-ku
Osaka 545 (JP)**

(72) Inventor: **Iwahashi, Hiroyuki
3-74 Shijooji 3-chome
Nara-shi Nara-ken (JP)**
Inventor: **Nishioka, Yoshiki
160-19 Shoji-cho
Tenri-shi Nara-ken (JP)**
Inventor: **Hakaridani, Mitsuhiro
856-12 Kidera-cho
Nara-shi Nara-ken (JP)**

(74) Representative: **Wright, Peter David John et al
R.G.C. Jenkins & Co. 26 Caxton Street
London SW1H 0RJ (GB)**

EP 0 083 248 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an apparatus for calculating auto-correlation coefficients and to an auto-correlation unit for pattern recognition using auto-correlation coefficients for stored signal samples.

Auto-correlation coefficient $C_\tau$ used in pattern recognition for voice recognition can generally be obtained by the following equation:

$$C_\tau = \sum_{n=0}^{N-1} X_n \cdot X_{n-\tau} \quad \sum_{n=0}^{N-1} X_n \cdot X_n$$

$(\tau = 0, 1,...p)$

where $\tau$ indicates the degree of the auto-correlation coefficient sought to be calculated.

Conventional auto-correlation units for voice recognition are set up of a multiplier and an adder. The multiplication items in the above equation are calculated and pieces of the auto-correlation coefficients are calculated by adding these results in the adder in order to obtain the cumulative sum thereof.

Those state-of-art units for calculation of the auto-correlation coefficients have the disadvantage of requiring expensive multipliers and also complicated circuitry. As a result the proportion of the auto-correlation unit circuitry within the entire pattern recognition apparatus is large and auto-correlation calculation demands a greater amount of time during recognition.

Various techniques for signal cross-correlation are known, for example from International Conference on Charge Coupled Devices, Conference 3, 1976, The Technology and Applications of Charge Coupled devices, Edinburgh, pages 238—258. This document discloses a technique of cross-correlation involving calculating the squares of sums of sample values of two discrete signals. The present invention, however, is concerned with auto-correlation, the principal aim being to provide an apparatus for calculating auto-correlation coefficients by means of a simple circuitry which obviates the need for an expensive multiplier and alleviates the above discussed disadvantages.

More particularly, the invention aims to provide circuitry which can calculate approximate auto-correlation coefficients by squaring the sum of $X_n$ and $X_{n-\tau}$ without the use of a multiplier where $X_n$, $X_{n-\tau}$ are stored signal samples.

To attain the above objectives, the present invention provides apparatus for calculating auto-correlation coefficients, in which the coefficients are calculated by determining the square of sums of sample values X and $X_{n-\tau}$, characterised in that said squares $(X_n+X_{n-\tau})^2$ are determined by reading out contents of a memory (2) which is addressed using address signals representing the values of said sums $(X_n+X_{n-\tau})$ of said sample values, and which stores the squares of said values of said sums.

This apparatus is incorporated in an auto-correlation unit for pattern recognition for providing auto-correlation coefficients for a number Ni of sampled input values Xn (n=0 to N−1), the unit also comprising means for extracting the number N of sampled input values Xn from a series of sample values expressed with a required multi-bit accuracy, the apparatus further including

means (1) for calculating the sum of the sample values $X_n$ and $X_{n-\tau}$ ($\tau = 0-P$) to provide an address signal for addressing said memory (2); and

means (3, 4, 5) responsive to the output $(X_n+X_{n-\tau})^2$ of the memory for providing the auto-correlation coefficient according to the following formula:

$$\sum_{n=0}^{N-1} (X_n+X_{n-\tau})^2 \bigg/ 2 \cdot \sum_{n=0}^{N-1} X_n^{2-1}$$

The present invention will be better understood from the detailed description given hereinbelow and the accompanying drawings which are given by way of illustration only, and thus are not limitative of the present invention and wherein:

Fig. 1 is a block diagram showing the scheme of an embodiment of this invention;

Fig. 2 is a block diagram showing in more detail the embodiment of this invention;

Fig. 3 is an illustration of the input-to-output relation of a ROM in the arrangement as shown in Fig. 2; and

Fig. 4 is a time chart of the auto-correlation of Fig. 2.

An auto-correlation function $R_\tau$ as for discrete input signals $X_n$ (sample values) can generally be expressed as follows:

$$R_\tau = \frac{1}{N} \sum_{n=0}^{N-1} X_n \cdot X_{n-\tau} \tag{1}$$

$(\tau = 0, 1, 2,..., P)$

2

If we normalize the input signals with the auto-correlation function R when $\tau=0$, the auto-correlation coefficient $C_\tau$ can be represented:

$$C_\tau = \frac{R_\tau}{R_0} = \sum_{n=0}^{N-1} X_n \cdot X_{n-\tau} \bigg/ \sum_{n=0}^{N-1} X_n^2 \qquad (2)$$

$(\tau = 0, 1, 2, ..., P)$

Considering R' represented in terms of the square of the sum of $X_n$ and $X_{n-\tau}$,

$$R'_\tau = \frac{1}{N} \sum_{n=0}^{N-1} [X_n + X_{n-\tau}]^2 \qquad (3)$$

$$= \frac{1}{N} \sum_{n=0}^{N-1} X_n^2 + 2 \cdot \frac{1}{N} \sum_{n=0}^{N-1} X_n \cdot X_{n-\tau} + \frac{1}{N} \sum_{n=0}^{N-1} X_{n-\tau}^2 \qquad (3)'$$

$(\tau = 0, 1, 2, ..., P)$

Because the difference between the first and third items is very small if $N \gg P$, reasonably good approximation of the auto-correlation coefficient is available as follows:

$$\frac{1}{N} \sum_{n=0}^{N-1} X_{n-\tau}^2 \cong \frac{1}{N} \sum_{n=0}^{N-1} X_n^2$$

The above equation (3)' can be rewritten:

$$\left\{ R'_\tau = 2 \left[ \frac{1}{N} \sum_{n=0}^{N-1} X_n^2 + \frac{1}{N} \sum_{n=0}^{N-1} X_n \cdot X_{n-\tau} \right] \right\} \qquad (4)$$

$(\tau = 0, 1, 2, ..., P)$

Equation )4) can be rewritten as follows, using the auto-correlation functions $R_0$ and R:

$$R'_\tau = 2 \left\{ \frac{1}{N} \sum_{n=0}^{N-1} X_n^2 + \frac{1}{N} \sum_{n=0}^{N-1} X_n \cdot X_{n-\tau} \right\} = 2(R_0 + R_\tau) \qquad (5)$$

$(\tau = 1, 1, 2, ..., P)$

Equation (6) is available from equation (3)

$$R'_0 = 4R_0 \qquad (6)$$

Equation (7) is available from equations (5) and (6)

$$\frac{R'_\tau}{R'_0} = \frac{2(R_0 + R_\tau)}{4R_0} \qquad (7)$$

Equation (7) can be rewritten into equation (8):

$$\frac{R_\tau}{R_0} = 2 \cdot \frac{R'_\tau}{R'_0} - 1 \qquad (8)$$

Substituting equations (3) and (6) into equation (8),

3

$$\frac{R_\tau}{R_0} = 2 \cdot \frac{1}{N} \sum_{n=0}^{N-1} [X_n + X_{n-\tau}]^2 \Big/ 4 \cdot \frac{1}{N} \sum_{n=0}^{N-1} X_n^2 - 1$$

$$= \sum_{n=0}^{N-1} [X_n + X_{n-\tau}]^2 \Big/ 2 \cdot \sum_{n=0}^{N-1} X_n^2 - 1 \tag{9}$$

$(\tau = 0, 1, 2, ..., P)$

Equation (9) reveals that the approximated value of the auto-correlation coefficient becomes available by squaring the sum of the input samples.

The following explains in detail the way in which the auto-correlation coefficients are calculated according to equation (9), pursuant to the principle of the present invention.

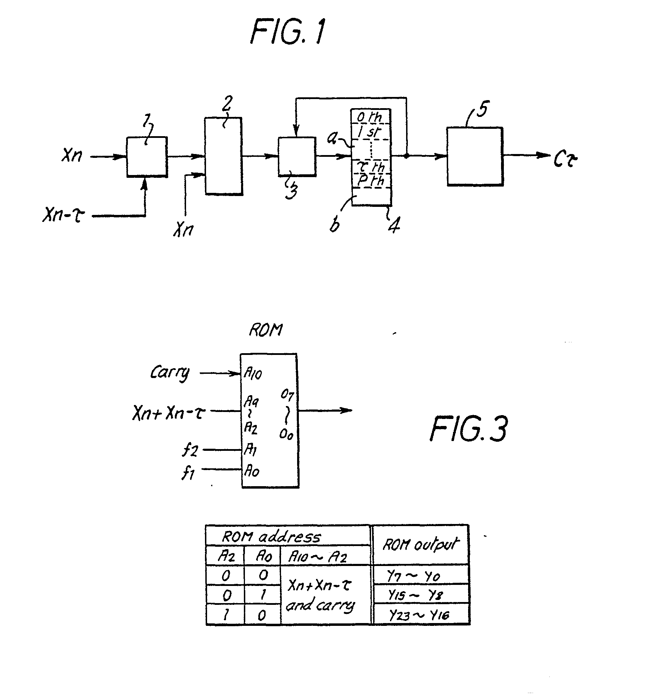

In Fig. 1, an adder 1 is provided which adds sample values $X_n$ and $X_{n-\tau}$ expressed with a required accuracy of multiple bits (e.g. 8 bit) and the output (maximum: 9 bits) of the adder 1 is fed to a ROM 2 (read only memory) in the next stage as an address signal for the ROM 2. The memory ROM 2 is designed so as to deliver the square in the form of an 18 bit output, when addressed by the 9 bit input signal representing $(X_n + X_{n-\tau})$ from the adder 1. An adder 3 is further provided which repeatedly (n times) adds the squared value recieved from the ROM 2 with the memory contents of the RAM 4, in which the previous accumulated results are memorized. The results $(X_n + X_{n-\tau})^2$ is finally stored in a region "a" of memory 4.

Similarly, $X_n$ is applied as address signals for the ROM 2 and the squared value $X_n^2$ is fetched from the ROM 2. This value is cumulatively added (n=0 to N−1) and the result $X_n^2$ is memorized in a region "b" of the memory 4.

A calculation unit 5 is provided to calculate the auto-correlation coefficient C by executing operations according to equation (9), based on the following squared cumulative values memorized in memory 4:

$$\sum_{n=0}^{N-1} (X_n + X_{n-\tau})^2$$

and

$$\sum_{n=0}^{N-1} X_n^2$$

The contents read out from the region "b" of the memory 4 are doubled and divided by (P+1) values of the result read out from the region "b" of the memory 4 and subtraction of "1" is effected on the results of such division. This results in producing (P+1) values of the auto-correlation coefficients $C_\tau(\tau=0, 1, ... P)$.

In the foregoing manner, the auto-correlation coefficients used as feature parameters in pattern recognition of voice recognition systems can be approximately obtained by simple circuitry which is generally set up by the adder, the ROM and the one or more RAM's.

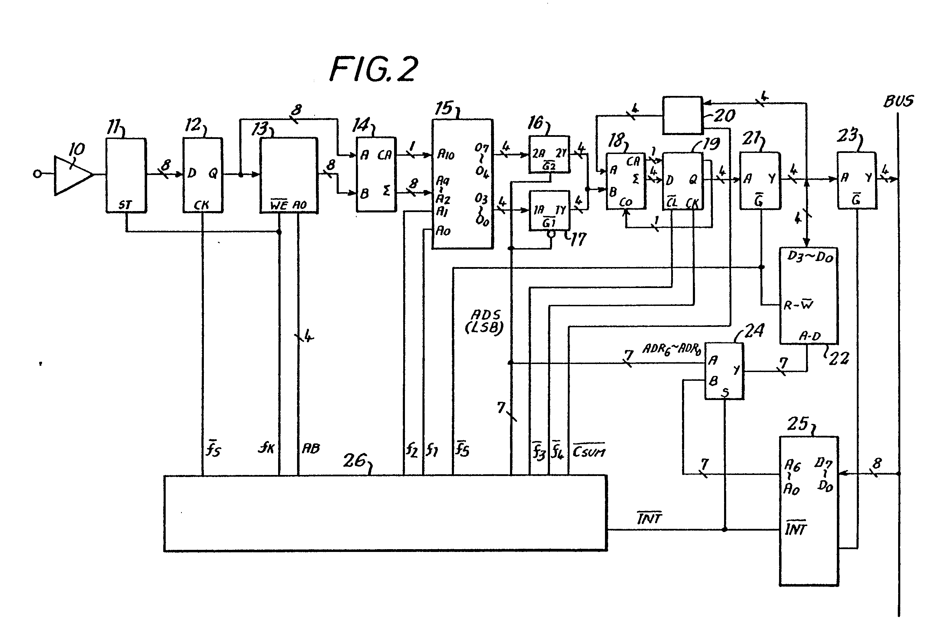

Fig. 2 details the scheme of the auto-correlation unit as shown in Fig. 1. This circuit generally includes an amplifier, an analog to digital converter, a ROM and RAM's, a central processing unit CPU for executing of approximation of the correlation coefficient and a timing generator for generation of various timing signals.

An analog signal (voice input) is amplified via the amplifier 10 and converted into an 8-bit binary offset code signal via the converter 11. $\overline{f}_s$ provides a start pulse to the analog to digital converter and a write pulse for the RAM 13. The resultant signal $X_n$ is held in a latch 12 responsive to $f_k$ and loaded into the RAM 13, while providing an A input to an adder 14 (corresponding to the adder 1 in Fig. 1). The RAM 13 is to store $X_{n-\tau}$ which in turn is outputted data $X_{n-\tau}$ with a delay $\tau$ in response to an address AD specified from the timing generator. Because of AD being 4 bits long, the RAM 13 is capable of storing data up to $X_{n-15}$. The output of the RAM 13 is also 8 bits and fed to a B input to the adder 14 which in turn adds the latter to the A input thereof and results in $X_n + X_{n-\tau}$. The result of such addition, i.e. the sum $X_n + X_{n-\tau}$, is 9 bits including a carry bit. The ROM 15 is accessed by the resulting 9 bit output to fetch $(X_n + X_{n-\tau})^2$ which has previously been stored therein. The reason why $X_n + X_{n-\tau}$ is stored in address $A_{10} - A_2$ of the ROM is due to the facts that $(X_n + X_{n-\tau})^2$ consists of 32 bits and is divided into 4 groups in outputting the same. For such grouping signals $f_1$ and $f_2$ are fed from the timing generator to $A_0$ and $A_1$.

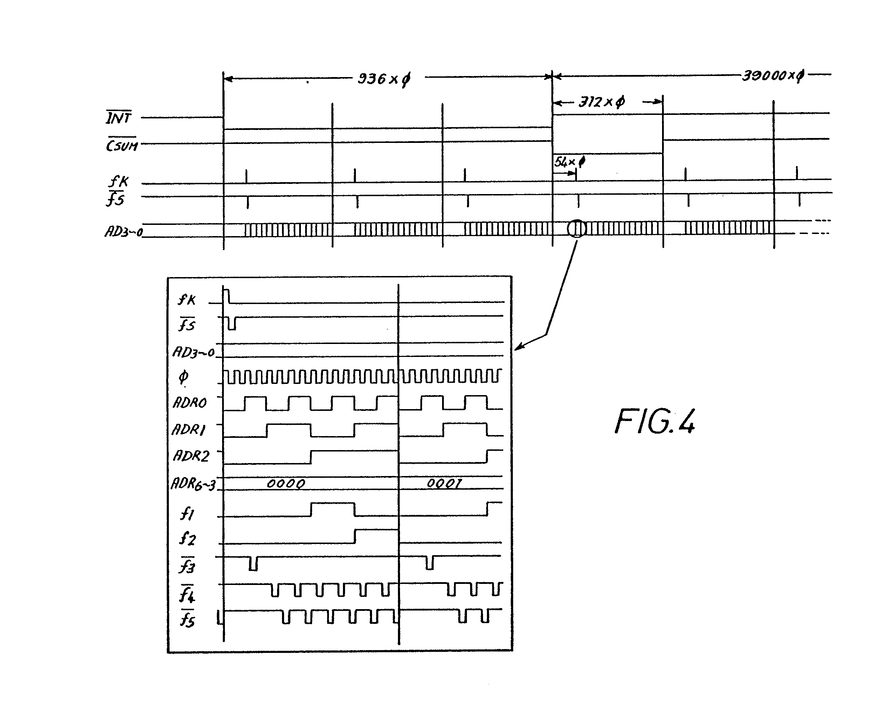

The above procedure offers calculation of $(X_n + X_{n-\tau})^2$. Because of the upper 8 bits of $(X_n + X_{n-\tau})^2$ being constantly "0", calculation of $\Sigma(X_n + X_{n-\tau})^2$ is effected on only 24 bits while ignoring the upper 8 bits (see Fig. 3).

The following describes a calculation circuit for evaluating $\Sigma(X_n + X_{n-\tau})^2$, which circuit includes selectors 16 and 17, an adder 18, the RAM 22, buffers 21 and 23 and a clear gate 20. For simplicity of circuit design, the 8 bit output of the ROM 15 is further divided into two groups and addition is effected every 4 bits in evaluating $\Sigma(X_n + X_{n-\tau})^2$. The selectors $S_1$ and $S_2$ decide if signals under processing are the upper 4 bits or

4

lower 4 bits of the 8 bit output of the ROM as selected by the least significant bit of the address ADS of the RAM 22. The address ADS is established through the timing generator 26.

The sequence will now be discussed in which $\Sigma(X_n+X_{n-\tau})^2$ is calculated. The signals $s_1$ and $s_2$ are initially 00, addressing the lower 8 bits of $(X_n+X_{n-\tau})^2$. The output of the ROM is $Y_7$—$Y_0$. At this moment the least significant bit of ADS selects the lower 4 bits so that $Y_2$—$Y_0$ are fed to the B input of the adder 18 which also receives at its A input the lower 4 bits of $\Sigma(X_n+X_{n-\tau})^2$ currently fed from the RAM 22 through operation of the timing generator. The adder 18 seeks the sum of both the lower 4 bits and the results of such addition including a carry CA is held at a latch 19 in response to $\overline{f}_4$. CA is the carry for the following 4 bit addition and CO is a carry originating during the lower 4 bit addition. The latter need be "0" during the lower 4 bit addition and this demand is satisfied by $\overline{f}_3$ from the timing generator. The results of calculation held by the latch 19 except the carry are loaded into the RAM 22. The buffer 21 is of a tri-state type and shows a high impedance except during writing of the RAM 22. This timing requirement is determined by $\overline{f}_5$.

Upon completion of the lower 4 bit calculation the address ADS of the RAM 22 is updated with the lowest bit thereo selecting the upper 4 bits. The upper 4 bit calculation is carried out in the same timed manner as with the lower 4 bit calculation. Calculation on the outputs $Y_7$—$Y_0$ of the ROM is completed in this manner. Thereafter, $f_1$ and $f_2$ becomes "10" so that calculation proceeds in the order of the lower 4 bits and upper 4 bits with the result $\Sigma(X_n+X_{n-\tau})^2$ being placed into the RAM 22. This is true when $f_1$, $f_2$ are "01". Through the above routine of operations $\Sigma(X_n+X_{n-\tau})^2$ is calculated (n) times and the results of such calculations are written into the RAM 22.

Once

$$\sum_{}^{N}(X_n+X_{n-\tau})^2$$

has been evaluated, the timing generator informs the CPU of the end of calculation and at the same time renders $S_3$ operative so that the RAM 22 is accessible from the CPU. This is achieved with a signal $\overline{INT}$ from the timing generator. That is, the CPU is interrupted by the signal $\overline{INT}$ and fetches

$$\sum_{}^{N}(X_n+X_{n-\tau})^2$$

from the RAM 22. Because only the lower 4 bits of the resultant data are in effect, data matching is necessary. The correlation coefficient is obtained under the approximation as defined by equation (9).

During the interruption period $\overline{C_{SUM}}=0$ in the timing generator and the output from the RAM 22 is cleared via the gate to secure $\Sigma(X_n+X_{n-\tau})^2$. The unit is therefore ready to calculate $\Sigma(X_n+X_{n-\tau})^2$. The CPU should pick up the correlation coefficient from the RAM 22 during the period where $\overline{INT}=0$.

In Fig. 4, $\phi$ is a basic clock of 2.5 MHz (a pulse width of 200 ns). $AD_3$—$AD_0$ are decremented at the start of each time frame and then incremented sequentially in the above manner. $f_k$ and $\overline{f}_s$ have a pulse width of 200 ns and a frequency of 8 KHz. $ADR_6$—$ADR_3$ are sequentially incremented as is clear from Fig. 4. $\overline{f}_4$ and $\overline{f}_5$ are not developed while $\overline{INT}$ is active.

As explained in the foregoing, this invention offers a highly cost effective auto-correlation unit for pattern recognition with simple circuitry without the need to use an expensive multiplier, but which has comparatively high accuracy and can, moreover, calculate auto-correlation coefficients at high speed.

## Claims

1. Apparatus for calculating auto-correlation coefficients, in which the coefficients are calculated by determining the square of sums of sample values X and $X_{n-\tau}$, characterised in that said squares $(X_n+X_{n-\tau})^2$ are determined by reading out contents of a memory (2) which is addressed using address signals representing the values of said sums $(X_n+X_{n-\tau})$ of said sample values, and which stores the squares of said values of said sums.

2. An auto-correlation unit for pattern recognition for providing auto-correlation coefficients for a number N of sampled input values $X_n$ (n=0 to N−1), said unit comprising:

means for extracting the number N of sampled input values $X_n$ from a series of sample values expressed with a required multi-bit accuracy; and

apparatus according to claim 1 for calculating the auto-correlation coefficients, said apparatus further including:

means (1) for calculating the sum of the sample values $X_n$ and $X_{n-\tau}$ ($\tau=O-P$) to provide an address signal for addressing said memory (2); and

means (3, 4, 5) responsive to the output $(X_n+X_{n-\tau})^2$ of the memory for providing the auto-correlation coefficient according to the following formula:

$$\left.\sum_{n=0}^{N-1}(X_n+X_{n-\tau})^2 \middle/ 2 \cdot \sum_{n=0}^{N-1}X_n^2\right.-1$$

**Patentansprüche**

1. Einrichtung zur Berechnung von Auto-Korrelationskoeffizienten, bei dem die Koeffizienten durch Bestimmung des Quadrats der Summen von Abtastwerten X und $X_{n-\tau}$ berechnet werden, dadurch gekennzeichnet, daß die quadratischen Größen $(X_n+X_{n-\tau})^2$ durch Auslesen des Inhalts eines Speichers bestimmt werden, der unter Verwendung von Adresssignalen adressiert wird, welche den Werten der Summen $(X_n+X_{n-\tau})$ der Abtastwerte entsprechen und der die Quadratgrößen der besagten Summenwerte speichert.

2. Auto-Korrelationseinheit zur Mustererkennung und zur Bereitstellung von Auto-Korrelationskoeffizienten für eine Anzahl N von getasteten Eingangswerten $X_n$ (n=0 bis N−1) mit

einer Einrichtung zur Extrahierung der Anzahl N von getasteten Eingangswerten $X_n$ aus einer Serie von Abtastwerten, die mit einer geforderten Multi-Bit-Genauigkeit wiedergegeben sind und

einer Einrichtung nach Anspruch 1 zur Berechnung der Auto-Korrelationskoeffizienten, wobei die letztgenannte Einheit außerdem

eine Einrichtung (1) zur Errechnung der Summe der Abtastwerte $X_n$ und $X_{n-\tau}$ (τ=0−P) enthält, um ein Adresssignal zur Adressierung des Speichers (2) bereitzustellen und

Mittel (3, 4, 5) aufweist, welche auf den Ausgang $(X_n+X_{n-\tau})^2$ des Speichers ansprechen, um den Auto-Korrelationskoeffizienten gemäß folgender Formel zu liefern:

$$\left.\sum_{n=0}^{N-1} (X_n+X_{n-\tau})^2 \right/ 2 \cdot \sum_{n=0}^{N-1} X_n^2 - 1.$$

**Revendications**

1. Dispositif pour calculer des coefficients d'auto-corrélation, dans lequel les coefficients sont calculés par détermination du carré des sommes de valeurs échantillons X et $X_{n-\tau}$, caractérisé en ce que lesdits carrés $(X_n+X_{n-\tau})^2$ sont déterminés par lecture du contenu d'une mémoire (2), qui est adressée moyennant l'utilization de signaux d'adresses représentant les valeurs desdites sommes $(X_n+X_{n-\tau})$ desdites valeurs échantillons et mémorise les carrés desdites valeurs desdites sommes.

2. Unité d'autocorrélation pour la reconnaissance de formes, servant à fournir des coefficients d'autocorrélation pour un nombre N de valeurs d'entrée échantillonnées $X_n$ (n=0 à N−1), ladite unité comprenant:

des moyens pour extraire le nombre N de valeurs d'entrée échantillonnées $X_n$ à partir d'une série de valeurs d'échantillons exprimées avec une précision requise à bits multiples; et

un dispositif selon la revendication 1 pour calculer les coefficients d'autocorrélation, ledit dispositif comprenant en outre:

des moyens (1) pour calculer la somme des valeurs échantillons $X_n$ et $X_{n-\tau}$ (τ=0−P) pour délivrer un signal d'adresse pour l'adressage de ladite mémoire (2); et

des moyens (3, 4, 5) répondant au signal de sortie $(X_n+X_{n-\tau})^2$ de la mémoire pour fournir le coefficient d'autocorrélation conformément à la formule suivante:

$$\left.\sum_{n=0}^{N-1} (X_n+X_{n-\tau})^2 \right/ 2 \cdot \sum_{n=0}^{N-1} X_n^2 - 1.$$

## FIG.1

## FIG.3

ROM

| ROM address | | | ROM output |
|---|---|---|---|
| $A_2$ | $A_0$ | $A_{10} \sim A_2$ | |
| 0 | 0 | $X_n + X_{n-\tau}$ and carry | $Y_7 \sim Y_0$ |
| 0 | 1 | | $Y_{15} \sim Y_8$ |
| 1 | 0 | | $Y_{23} \sim Y_{16}$ |

1

FIG.2

FIG.4